# EUROPÄISCHE PATENTSCHRIFT

(11) **EP 3 271 220 B1**
(45) Veröffentlichungstag und Bekanntmachung des Hinweises auf die Patenterteilung: **20.10.2021**
(21) Anmeldenummer: 15817915.0
(22) Anmeldetag: 30.12.2015
(51) Int. Cl.: B60T 7/04, B60T 8/40, B60T 13/68, B60T 13/74

(54) **BREMSANLAGE MIT DRUCKAUFBAU-REGELUNG MIT SPEZIELLER VERSCHALTUNG DER EINLASSVENTILE MIT BREMSKREIS/RADBREMSEN UND VERFAHREN ZUR DRUCKREGELUNG**
PRESSURE BUILD-UP CONTROLLED BRAKE SYSTEM WITH SPECIFIC INTERCONNECTION OF INTAKE VALVES WITH BRAKE CIRCUIT/WHEEL BRAKES, AND METHOD FOR CONTROLLING PRESSURE
SYSTÈME DE FREINAGE À RÉGULATION DE MONTÉE EN PRESSION AVEC CÂBLAGE SPÉCIAL, VANNES D'ENTRÉE À CIRCUIT DE FREINAGE/FREINS ET PROCÉDÉ DE RÉGULATION DE PRESSION

(30) Priorität: 16.03.2015 DE 202015107072 U; 16.03.2015 DE 202015107075 U; 16.03.2015 DE 202015107079 U
(43) Veröffentlichungstag der Anmeldung: 24.01.2018
(73) Patentinhaber: IPGate AG, 8808 Pfäffikon (CH)
(72) Erfinder: LEIBER, Heinz, 71739 Oberriexingen (DE); LEIBER, Thomas, 81675 München (DE); VAN ZANTEN, Anton, 71254 Ditzingen (DE)
(74) Vertreter: Lenzing Gerber Stute
(86) Internationale Anmeldenummer: PCT/EP2015/081403
(87) Internationale Veröffentlichungsnummer: WO 2016/146224

(56) Entgegenhaltungen:
- DE-A1-102013 203 594
- DE-A1-102013 222 061
- US-A- 6 007 161

## Beschreibung

Die Erfindung betrifft eine Betätigungsvorrichtung, insbesondere für eine Fahrzeug-Bremsanlage gemäß dem Oberbegriff des Patentanspruches 1.

Seit Beginn der ABS-Serieneinführung in 1978 wird während der ABS-Regelung nach dem Druckabbau (P_{ab}) der Druck in Stufen über Einlassventile (EV) aufgebaut (P_{auf}). Neuerdings wird das Einlassventil (EV) PWM-gesteuert (PulsWeiten-Modulation) zur genaueren Drucksteuerung. Der Druckaufbau (P_{auf}) wird über das Einlassventil (EV) zeitgesteuert, die Druckamplitude ist eine Funktion der Zeitsteuerung der Ventilöffnung und noch weiterer Parameter, wie Differenzdruck über das Ventil, Ventildruck und Temperatur. Der gestufte Druckaufbau (P_{auf}) erzeugt auch Geräusch durch Druckschwingungen.

Zur Verbesserung der Genauigkeit der Druckamplitude und des Geräusches wurde in den Patentanmeldungen DE 10 2005 055751 und DE 10 2009 008944 der Anmelderin ein sog. Multiplex-Verfahren (MUX) vorgestellt. Hierunter wird ein Regel-und Steuerverfahren verstanden, bei dem mit einer Druckquelle (wie Kolben, Doppelhubkolben, Stufenkolben, Pumpe) verbundene Aktuatoren, insbesondere Radbremsen druckbeaufschlagt werden, wobei mittels Messung und Steuerung des Volumens der Druckquelle ein Druckaufbau und Druckabbau in den Aktuatoren gesteuert wird. Insbesondere erfolgt die Druckamplitude für den Druckaufbau (p_{auf}) und Druckabbau (p_{ab}) durch Volumenzumessung eines Kolbensystems, wobei die Druckamplitude aus der p-V-Kennlinie (Druck-Volumen-Kennlinie) des Radzylinders abgeleitet wird. Diese Methode ist genau und geräuscharm.

Die DE 10 2013 203 594 A1 offenbart ein Verfahren mit einer Volumensteuerung über einen Kolben mit herkömmlichen Einlassventilen und dazu parallel geschalteten Rückschlagventilen. Bei Druckdifferenzen des gesteuerten ABS-Druckes in den Radzylindern während der Regelung muss der Steuerdruck stets größer als der maximale Druck in den Radbremsen sein. Die Druckdifferenz kann insbesondere bei µ-Split sehr hoch sein. Das aus DE 10 2013 203 594 A1 bekannte Verfahren fordert Kenntnisse über die aktuellen Druckverhältnisse in den Radzylindern, damit nicht unbeabsichtigt Volumen aus einem Radzylinder über das dem Radzylinder zugeordneten Einlassventil parallelgeschaltete Rückschlagventil abfließt. Werden die Druckverhältnisse nur geschätzt, können Fehler im Druck von ±15 bar auftreten. Da für die Steuerung Druckwerte verglichen werden, können zudem beim Vergleich Druckfehler auftreten, die doppelt so groß sind: ±30 bar. Da in dem Verfahren sichergestellt werden muss, dass der Vordruck nicht unterhalb des Drucks in den Radzylindern liegt, muss der Steuerdruck somit mindestens 60bar über dem geschätzten Druck der Radzylinder gehalten werden. Bei der PWM-Steuerung der Ventile unterliegt der Schließdruck der Ventile Streuungen, die z.B. von der Spulentemperatur der Ventile abhängen. Hierdurch muss der Steuerdruck nochmals weiter erhöht werden. Damit das aus DE 10 2013 203 594 A1 bekannte Verfahren sicher funktioniert, muss der Steuerdruck im Bereich von 100bar über den höchsten Druck in den Radbremsen liegen. Beim Druckaufbau bildet das Ventil einen Durchflusswiderstand, wodurch der Steuerdruck weiter ansteigt. Diese notwendigen hohen Steuerdrücke belasten die Bremsanlage und die Ventile erheblich, und es können nachteilig keine Ventile mit großem Querschnitt verwendet werden.

Die Einlassventile (EV) stellen im Bremssystem einen Drosselwiderstand dar, der einen nennenswerten Staudruck bei hoher Druckaufbaugeschwindigkeit darstellt, der sich in der Rückfallebene bei Ausfall der Bremskraftverstärkung (BKV) durch Bremswegverlängerung bemerkbar macht. Bei integriertem ABS belastet der Staudruck den Motor für die Druckerzeugung um ca. 10 %.

Aus US 6007 161 A ist ein elektronisch gesteuertes Bremssystem bekannt, bei dem jeder Radbremse jeweils ein Ein- und ein Auslassventil zugeordnet ist, wobei steuerbare Druckquellen für jeden Bremskreis vorgesehen sind, welche mittels Hydraulikleitungen mit den Radbremsen verbunden sind, um letzteren Druckmittel zuzuführen.

### Aufgabe der Erfindung

Der Erfindung liegt die Aufgabe zugrunde, die gattungsgemäße Betätigungsvorrichtung weiter zu verbessern, wodurch insbesondere der Druckaufbau P_{auf} genauer gesteuert werden kann, ohne dass dabei PWM-Verfahren zwingend eingesetzt werden muss und dass die Ventile auf große Querschnitte, d.h. geringen Durchflusswiderstand ausgelegt und nicht auf sichere Schaltfähigkeit bei hohen Differenzdrücken ausgelegt werden müssen. Da die Differenzdruckfestigkeit von Ventilen u.a. die Kosten der Ventile bestimmt, soll mit dem Verfahren eine Kostenreduzierung erreicht werden. Außerdem soll das Geräusch beim Druckaufbau P_{auf} reduziert werden.

Die Aufgabe wird erfindungsgemäß mit den Merkmalen der Patentansprüche 1 und 15 gelöst.

Bei dem neuen Verfahren wird beim p_{auf} der Steuerdruck pᵥₒᵣ mit einer relativ kleinen Druckdifferenz, von z.B. ca. 10-20 bar zum Ist-Druckniveau, welches im Wesentlichen vom Reibbeiwert der Fahrbahn abhängig ist, für die jeweilige Radbremse individuell eingestellt. Die kleine Druckdifferenz von z.B. ca. 10-20 bar wird dabei für alle Ist-Druckniveaus eingehalten. Sofern für mindestens zwei Radbremsen der Raddruck erhöht werden muss und dafür unterschiedliche Soll-Drücke bestimmt worden sind, wird nachfolgend der größte mittels der Druckquelle einzustellende Steuervordruck pᵥₒᵣ als Maximaldruck p_{vor,max} bezeichnet. Dieser Maximaldruck P_{vor,max} kann kleiner sein als der in einer Radbremse eingeschlossener Ist-Druck, sofern in dieser Radbremse der Bremsdruck nicht geändert werden muss. Aufgrund der Möglichkeit, den Radbremsdruck mittels Volumensteuerung ΔV und/oder mittels Zeitsteuerung Δt in verschiedenen Radbremsen einstellen zu können, ergeben sich erhebliche Vorteile hinsichtlich der Dynamik der Bremsanlage. So kann mittels des vorgegebenen Steuerdrucks pᵥₒᵣ, welcher um z.B. 10-20 bar höher ist als der z.B. in zwei Radbremsen einzustellende Soll-Druck, der Druck in diesen Radbremsen gleichzeitig, zeitlich überlappend oder zeitlich nacheinander der Soll-Druck eingeregelt bzw. eingestellt werden. So kann z.B. durch das zeitlich vorbestimmte Öffnen des der jeweiligen Radbremse zugeordneten Schaltventils der Soll-Druck bis zum geforderten Soll-Druck angehoben werden. Dabei ist unter zeitlichem Öffnen ein einmaliges Öffnen für eine vorbestimmte Zeitdauer Δt zu verstehen. Nach dem Ende der Zeitdauer Δt wird das entsprechende Ventil geschlossen. Das erfindungsgemäße zeitliche Öffnen unterscheidet sich somit deutlich vom PWM-Verfahren.

Auch ergeben sich geringe Schwankungen der Durchflussmengen. Es ergeben sich zudem erheblich kleinere Druckdifferenzen am Ventil als bei ABS-Druckregelungen nach dem Stand der Technik, bei denen der für alle Radbremsen gleichzeitig wirkende Steuervordruck Pᵥₒᵣ sehr hohe Werte, z.B. bis 200bar, erreichen kann, und der sich aus der Pedalbetätigung ergibt. Bei gleichem Strömungsquerschnitt des Ventilquerschnitts sind deshalb die notwendigen Öffnungskräfte am Ventil bei ABS-Betrieb beim erfindungsgemäßen Verfahren kleiner als beim aus dem Stand der Technik bekannten ABS-Regelverfahren. Deshalb kann beim erfindungsgemäßen Verfahren der elektrische Strom zum Schließen des Ventils auf kleinere Werte begrenzt werden als beim vorbekannten ABS-Regelverfahren. Selbstverständlich ist es auch möglich, dass bei gleichem elektrischen Ventilstrom, der Ventilquerschnitt beim erfindungsgemäßen Verfahren mit einem größeren Strömungsquerschnitt ausgelegt werden kann als beim vorbekannten ABS-Regelverfahren. Weiter entstehen durch die Zeitsteuerung der Ventile beim Schließen bei den kleineren Druckdifferenzen geringere hydraulische Schwingungen und damit weniger Geräusche als bei großen Druckdifferenzen. Die Druckänderungen an der Druckquelle beim neuen Verfahren, z.B. Kolben, sind durch die geringeren Druckdifferenzen ebenfalls kleiner als beim

Standard ABS. Bei einem zeitlich reduzierten Volumenstrom durch das Ventil gegen Ende des Druckaufbaus P_{auf} sind die Druckschwingungen beim Schließen des Ventils minimal, so dass nur noch das Schließgeräusch des Ventils eine Geräuschquelle darstellt. Dieses Geräusch lässt sich weiter noch durch einen langsamen Abbau der Magnetkraft, durch entsprechende Spannungs- oder Stromsteuerung des Ventils, deutlich reduzieren.

Mit der erfindungsgemäßen Lösung bzw. ihren vorteilhaften Ausführungsformen wird auf überraschend einfache Weise erreicht, dass der Druckaufbau in einer Bremsvorrichtung sehr genau gesteuert werden kann, wobei insbesondere auch der Staudruck am Einlassventil der Bremsvorrichtung gering gehalten werden kann.

Vorteilhafte Ausführungsformen der Erfindung ergeben sich aus den weiteren Ansprüchen, auf die hier Bezug genommen wird, wobei diese vorteilhaft durch weitere Merkmale bzw. Merkmalskombinationen der in der Figurenbeschreibung dargestellten konkreten Ausführungsbeispiele ergänzt werden können.

Vorteilhafte konkrete Ausführungsbeispiele der Erfindung sind in der Zeichnung dargestellt und im Folgenden näher beschrieben.

### Es zeigen:

- Figur 1:: eine Bremsvorrichtung wie sie in der DE 10 2014 107112 der Anmelderin oder DE 10 2012 002 791 A1 beschrieben ist;
- Figur 1a:: eine erfindungsgemäße Ventilschaltung von Einlassventil (EV) und Auslassventil (AV);
- Figur 1b:: erfindungsgemäßes Einlassventil in Bremskreis;
- Figur 2:: mögliche prinzipielle Verläufe des Radbremszylinderdrucks (P) als Funktion der Zeit (t) während ABS-Betrieb;
- Figur 3:: unterschiedliche Möglichkeiten, wie die Druckerhöhungen (P) in den Radbremszylindern während dem ABS-Betrieb gesteuert werden;
- Figur 4:: Korrelation zwischen Druckveränderung und Volumenveränderung im Radbremszylinder;
- Figur 5:: Korrelation Volumenverschiebung und Kolbenverschiebung;
- Figur 6:: Verbindung der Bremskreise (BK1 und BK2) sind an der KolbenZylindereinheit getrennt oder über Bypass-Ventil (BV) für spezielle Funktionen, z. B. ABS, angeordnet;
- Figur 6a:: eine 2-kreisige Druckversorgung, bei der die Bremskreise (BK1 bzw. BK2) wahlweise getrennt oder gemeinsam mit Trennventil TV1 oder Trennventil TV2 verbunden sind; und
- Figur 6b:: eine 1-kreisige Druckversorgung, die über Trennventile (TV1 und TV2) mit den Bremskreisen (BK1 und BK2) verbunden ist.

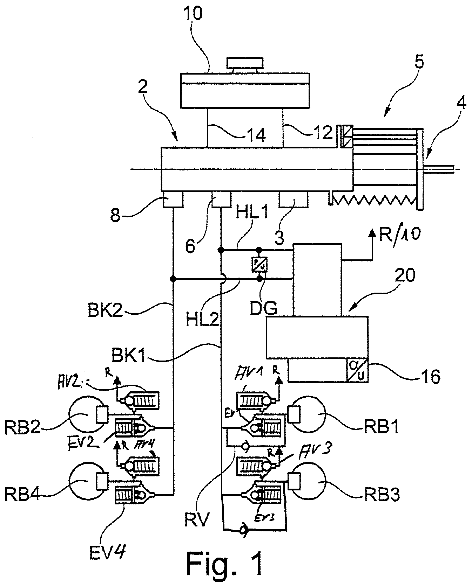

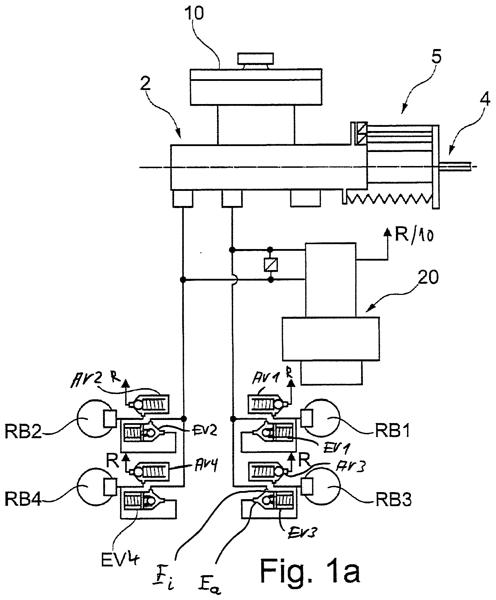

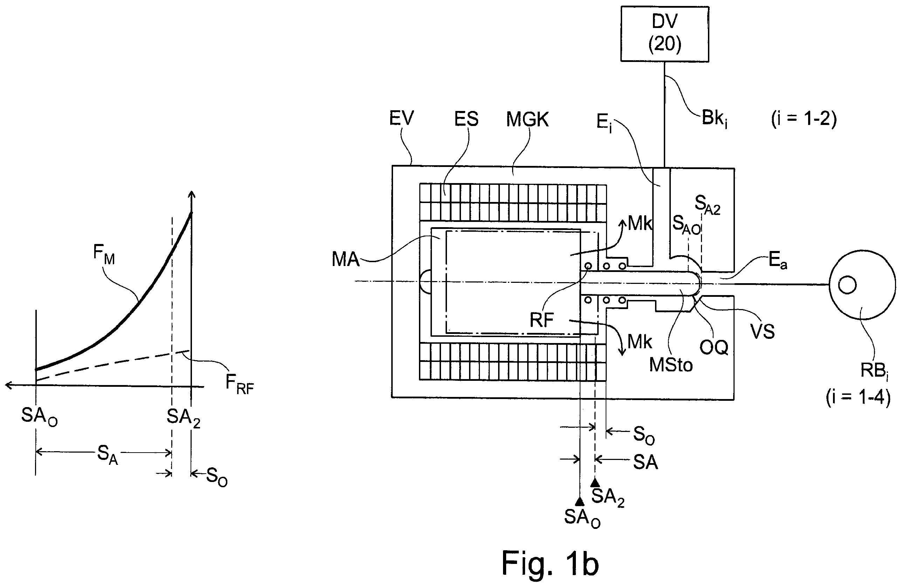

Die in **Figur 1** dargestellte Betätigungsvorrichtung für ein Bremssystem weist eine erste Kolben-Zylinder-Einheit (Hauptzylinder) 2 auf, die zur Druckerzeugung mittels einer Betätigungseinrichtung 4 betätigbar ist, wobei ein Bremspedal (nicht näher dargestellt) Bestandteil der Betätigungseinrichtung sein kann bzw. mit dieser verbunden ist. Zur Erzeugung des Pedalgefühls wird zweckmäßig ein Wegsimulator verwendet, der den gewohnten Zusammenhang zwischen Pedalkraft und Pedalweg herstellt. Die Betätigungseinrichtung ist zweckmäßig mit einer Sensoreinrichtung 5 zur Steuerung der Bremskraftverstärkung (BKV-Steuerung) versehen, wie sie z.B. in der DE 10 2010 050132 A1 der Anmelderin näher beschrieben ist.

Die erste Kolben-Zylinder-Einheit 2 weist hier zwei Zylinder- bzw. Arbeitsräume auf, die über Schaltventile 6, 8 zur Steuerung der Bremskraftverstärkerfunktion und Hydraulikleitungen BK1, BK2 mit Radbremsen, RB1, RB2, RB3 und RB4 verbunden sind. In den Hydraulikleitungen BK1, BK2 sind jeweils den Radbremsen zugeordnete Einlassventile EV1, EV2, EV3 und EV4 angeordnet. Von den zu den Radbremsen führenden Zweigleitungen zweigen ferner jeweils Rückführleitungen ab, die über Auslassventile AV1, AV2, AV3 und AV4 zu einem Vorratsbehälter 10 führen, der über Hydraulikleitungen 12, 14 mit den Arbeitsräumen der ersten Kolben-Zylinder-Einheit 2 verbunden ist.

Eine Druckversorgungseinrichtung (im Weiteren auch als "DV" bezeichnet), hier in Gestalt einer weiteren Kolben-Zylinder-Einheit 20, ist über Hydraulikleitungen HL1, HL2 mit den Hydraulikleitungen BK1, bzw. BK2 verbunden.

Zwischen den Hydraulikleitungen HL1 und HL2 ist ein Druckgeber DG angeordnet. Die Signale des Druckgebers DG und weiterer Einrichtungen werden in prinzipiell bekannter Weise in einer (nicht dargestellten) elektronischen Steuer- und Regeleinheit ECU verarbeitet.

Die Kolben-Zylinder-Einheit 20 weist hier einen (nicht näher dargestellten) Antrieb, insbesondere einen hochdynamischen Elektromotor und ggf. Getriebe zur Umsetzung einer Drehbewegung in eine Linearbewegung (insbesondere Kugel-Gewinde-Getriebe) auf. Der Kolben der zweiten Kolben-Zylinder-Einheit ist zweckmäßig als Doppelhubkolben ausgeführt, wie z.B. in der DE 10 2013 110188 A1 der Anmelderin, näher beschrieben. Der Antrieb ist mit einem Drehwinkelsensor/Wegsensor 16 zur Volumenzumessung der Druckversorgung versehen. Eine hydraulische Rücklaufleitung R verbindet die Kolben-Zylinder Einheit mit dem Vorratsbehälter 10. In der Verbindung zum Vorratsbehälter können optional weitere hydraulische Elemente (Rückschlagventil(e), Magnetventil(e)) angeordnet werden.

Für zukünftige Bremssysteme ist es wichtig, dass Ventildimensionierung berücksichtigt wird, und dass die Strömungsverluste klein sind. Hierbei ist eine Durchflussmenge zu berücksichtigen, welche sich nach der sog. Time-to-Lock (TTL)-Zeit richtet. TTL ist derart bemessen, dass der Blockierdruck für high µ innerhalb von 150 ms erreicht werden muss.

Die Betätigungsvorrichtung ist in Fig. 1 mit konventioneller Ventilschaltung für ABS mit vier Einlassventilen EV und vier Auslassventilen AV gezeichnet. Hierzu gibt es zwei Varianten mit Variante A je einem Rückschlagventil RV parallel zum Einlassventil (in Fig.1 beispielhaft nur in einem Bremskreis bei Radbremse RB1 und RB 3 dargestellt) oder Variante B starker Rückstellfeder im Einlassventil EV für großen Differenzdruck. Variante A wird in Bremssystemen des Standes der Technik (z.B. DE 10 2013 224 313) verwendet und ermöglicht kein Druck halten durch Schließen von Einlassventilen, da ein Druckabbau über die Rückschlagventile bei niedrigerem Vordruck als den Ist-Druck in den Radbremsen erfolgt. Daher muss insbesondere im Regelbetrieb bzw. in anderen Regelsituation, wo unterschiedliche Drücke in den Radbremsen geregelt werden (z.B. Rekuperation, Blending) der Vordruck immer höher bemessen sein als alle Ist-Drücke aller Räder. Dies hat eine sehr genaue Zeitsteuerung zur Folge bzw. erfordert einen PWM-Betrieb bzw. Ventile mit geringen Fertigungstoleranzen. Zudem ist der Durchflussquerschnitt der Ventile zu begrenzen.

Im ABS-Betrieb sind die Blockierdrücke stark unterschiedlich zwischen Vorderachse und Hinterachse. Bei µ-Split wird ein extremer Differenzdruck von bis zu 130 bar erreicht.

Soll nun der Steuerdruck im Bereich des Blockierdrucks liegen, so können im Bremskreis entsprechende Druckdifferenzen von ca. 130 bar auftreten, d.h. das high-µ Einlassventil (high-µ EV) muss einen maximalen Druck von 130 bar zuhalten, wenn am low-µ Einlassventil (low-µ EV) Atmosphärendruck (ca. 1bar) herrscht. Mit anderen Worten muss die Betätigungsvorrichtung bzw. Bremsvorrichtung in der Lage sein, auch aus solchen und ggf. weiteren Voraussetzungen sich ergebende Zustände sicher zu verarbeiten (Differenzdrucksicherheit) .

Kritisch wird der Fall b., bei dem das Einlassventil eine starke Rückstellfeder aufweist, wenn am high-µ Einlassventil (high- µ EV) die elektrische Ansteuerung ausfällt und der Steuerdruck, z. B. im Fehlerfall auf Atmosphärendruck einbricht. Hierbei muss das high-µ Einlassventil (high-µ EV) gegen den hohen Radzylinderdruck öffnen, was z. B. nur durch die bereits erwähnte hohe Rückstellfederkraft (RF) im Einlassventil (EV) möglich ist. Eine starke Rückstellfeder bedingt jedoch gleichzeitig hohe Magnetkräfte, wodurch das Ventil teuer wird und das Ventil, bedingt durch die hohe Ankerauftreffgeschwindigkeit auf den Anschlag, geräuschvoll bzw. laut ist.

Der Druckgeber DG ist zur Auswertung und Abspeicherung der p-V-Kennlinie sowie zur Feststellung des Druckniveaus beider Bremskreise notwendig. Die Druckwerte werden in einer hier nicht dargestellten Steuerelektronik (ECU) gespeichert bzw. ausgelesen. Der Druckgeber DG ist symbolisch mit beiden Bremskreisen verbunden, was mit einem Druckgeber DG vorwiegend im Bremskreis 1 (BK 1) gemacht werden kann, wenn z. B. die Bremskreise durch entsprechende Ventilschaltung für den Druckaufbau P_{auf} parallel geschaltet werden.

Die **Figur 1a** zeigt eine erfindungsgemäß geänderte Ventilschaltung von Einlassventil EV und Auslassventil AV ohne Rückschlagventile RV. Hierbei ist das Einlassventil (EV) über den Innenraum des Ventils mit dem Bremskreis BK1 bzw. BK2 verbunden, derart, dass der Vordruck Pvor die Schließkraft des Einlassventils EV unterstützt, wobei die Durchströmrichtung der Einlassventile EV im Vergleich mit der Durchströmrichtung der Einlassventile EV gemäß Figur 1 umgekehrt ist. Die Ventildurchströmung erfolgt dabei gemäß Figur 1a über den Ankerraum der Einlassventile EV. Dies wird erreicht, indem der in Figur 1 dargestellte Ventileingang gemäß Figur 1a als Ventilausgang verwendet wird, wobei der Ventilausgang über eine hydraulische Verbindung jeweils mit den Radbremsen RB1,..., RB4 verbunden ist, mit anderen Worten werden die Anschlüsse des Einlassventils EV an den Radbremszylinder und an den Bremskreis vertauscht. Entsteht nun der vorgenannte Fall "Ausfall der Ansteuerung", so öffnet der Radbremszylinderdruck das bzw. die Einlassventil(e) EV.

Bei der Ventildimensionierung muss die Rückfellfeder bei einer oben beschriebenen Anschlussvorrichtung derart ausgelegt sein, dass nicht die Druckunterschiede zwischen Einlassventil-Eingang in dem Ankerraum und Einlassventil-Ausgang hinter dem Ventilsitz dazu führen, dass sich die Ventile beim dynamischen Druckaufbau nicht schließen. Die höchste Druckaufbaudynamik wird bei Notbremssituation im Bremskraftverstärkerbetrieb (TTL relevant), bzw. bei extremen Druckänderungen (z.B. µ-Sprung) im Regelbetrieb erreicht. Auf die höchste Druckaufbaudynamik in den Ventilen ist folglich die Rückstellfeder der Einlassventile auszulegen. Wird die Querschnittsfläche im Ventilsitz der Ventile erhöht, ist dies vorteilhaft für eine Reduzierung der Druckdifferenzen im Ventil und gleichzeitig führt dies zu einer Entlastung des Motors zur Erreichen einer kurzen TTL. Die höheren Querschnittsflächen wiederrum reduzieren die Anforderungen an die Rückstellfederdimensionierung und somit Ventilmagnetkraft. Die maximalen Magnetkräfte sind klein, da die maximale Druckdifferenz von 130 bar zwischen Radbremszylinderdruck (130bar) und Hauptbremszylinderdruck (Atmosphärendruck 1bar) und bei geschlossenem Ventil, d. h. kleinem Ankerluftspalt, wirkt. Die herkömmlichen Einlassventile EV müssen gegen die sehr hohen Differenzdrücke von bis zu ca. 250 bar zwischen hohen Hauptbremszylinderdruck von 250 bar und Radbremszylinderdruck von 1 bar sowie bei Staudruck bei hoher Durchflussmenge und Druckaufbaugeschwindigkeit funktionieren.

Durch die umgekehrte Anordnung des Einlassventils ergibt sich nun die Möglichkeit, das Einlassventil EV mit größerem Querschnitt und damit mit kleinem Staudruck zu dimensionieren.

Die **Figur 1b** zeigt eine mögliche Ausgestaltung des erfindungsgemäßen Einlassventils EV und den Anschluss an den Bremskreis BK sowie die Druckversorgung DV und die Radbremsen RBi.

Das Einlassventil EV weist einen Magnetanker MA, einen magnetischen Grundkörper MGK sowie eine Erregerspule ES auf. Wird das Magnetventil EV bestromt, verschiebt die Magnetkraft MK den Anker MA aus der Position S_{A0} in die Position S_{A2} um den Differenzweg S_{A}. Der Magnetanker MA bewegt einen Stößel MStö um den gleichen Weg, so dass der Stößel MStö am Ventilsitz VS zur Anlage gelangt und den Auslass Ea des Magnetventils schließt. Der Anker MA hat an dieser Stelle noch einen Restluftspalt S₀ zum magnetischen Grundkörper MKG, der dafür vorgesehen ist, dass der Anker MA bei Abschalten der Bestromung der Erregerspule ES des Ventils EV durch Ummagnetisierungsverluste des Eisenkreises nicht am Magnetgehäuse MGK haftet. Die Rückstellfeder RF bewegt bei Abschalten des Ventilstroms den Anker MA zurück in die Ausgangsstellung. Die Magnetkraft F_{M} steigt dabei bei kleinerem Luftspalt, d.h. zunehmenden Weg nichtlinear an. Die Rückstellfeder RF ist derart bemessen, dass die Magnetkraft F_{M} in der Ausgangsstellung S_{A0} größer ist als die Federkraft, damit ein sicheres Schließen des Ventils gewährleistet ist. Die Federkraft steigt mit zunehmenden Weg S_{A} an und ist in der Endstellung S_{A2} ebenfalls geringer als die Magnetkraft F_{M}. Vorzugsweise wird eine lineare Feder eingesetzt, damit die Magnetkraft F_{M} in der Endstellung bei gegebenen Strom deutlich höher ist als die Rückstellkraft, so dass das Ventil mit geringem Strom gehalten werden kann bzw. ein sicheres Schließen auch bei hohen Differenzdrücken zwischen Radbremse und Druckversorgung sichergestellt ist. Das Halten ist auch bei hohen Differenzdrücken sichergestellt, da die Magnetkraft bei geschlossener Ventilposition stark nichtlinear zunimmt. Die Rückstellfeder ist aber auch derart zu dimensionieren, dass die Funktion als stromlos offenes Ventil sichergestellt werden kann und das Ventil immer sicher öffnet.

Der Ausgang Eₐ des Ventils ist an die Radbremsen RBi (RB1-RB4) angeschlossen, der Eingang Eᵢ an einen Bremskreis BKi bzw. an die Druckversorgereinheit DV (20). Durch einen derartigen Anschluss kann das Einlassventil EV sowohl durch die Rückstellfeder RF als auch durch den Druck in der Radbremse geöffnet werden, was insbesondere im Fehlerfall bzw. Störfall der Bremsanlage (z.B. Ausfall der Spannung am Ventil) sehr wichtig ist. Zudem wirkt auch bei hohen Drücken im Bremskreis und kleinen Drücken in der Radbremse nur die Druckdifferenz zwischen Einlass Ei und Auslass Ea auf den Stößel MStö. Dieser

Differenzdruck am Ventil ist im Druckaufbau relativ gering, muss jedoch bei der Federauslegung berücksichtigt werden, damit die Druckdifferenz nicht dazu führt, dass beim Druckaufbau das Ventil zugedrückt wird, wenn das Volumen von der Druckversorgung DV in die Radbremse gefördert wird. Ventile mit großem Öffnungsquerschnitt ÖQ bzw. geringen Strömungsverlusten reduzieren diesen Effekt.

Insbesondere bei einem Druckaufbau mit Druckvolumensteuerung bzw. Zeitsteuerung mit niedrigem Differenzdruck zwischen Vordruck und Istdruck in der Radbremse können die zuvor beschriebenen Ventile mit großem Öffnungsquerschnitt eingesetzt werden, da die Regelgenauigkeit sehr hoch ist. Dies hat wiederum Vorteile, dass nur geringe Strömungsverluste, insbesondere beim schnellen Druckaufbau (TTL), auftreten und der Antriebsmotor nur eine geringe Leistung für den schnellen Druckaufbau in kürzester Zeit (TTL= 150ms) erfordert.

Zudem kann aufgrund der geringen Strömungsverluste der vorteilhaft gestalten Einlassventile ein Druckabbau über die Einlassventile schnell erfolgen. Ein genauer Druckabbau über die Einlassventile EV kann durch entsprechende Steuerung der Kolbenbewegung der Druckversorgereinheit 20 vorgenommen werden. Optional ist es auch möglich das bekannte MUX-Verfahren mit der vorbeschriebenen Ventilschaltung umzusetzen oder mit der Druckabbausteuerung über Auslassventile AV in einem Bremskreis, insbesondere für Verbraucher mit geringem Volumenhaushalt, wie z.B. den Radbremsen der Hinterachse. D.h. es ist auch eine Kombination möglich, dass das MUX-Verfahren in Zusammenhang mit der neuen Ventilbeschaltung nur in zwei Radbremsen (z.B. Vordachse) eingesetzt wird und an zwei weiteren Radbremsen der Druckabbau konventionell erfolgt. Dies würde bedeuten, dass zwei Radbremsen/Aktoren mit Einlass- und Auslassventilen (EV+AV) vorgesehen sind und zwei Radbremsen/Aktoren nur mit Einlass- bzw. Schaltventilen EV. In diesem Fall könnten nur die Radbremsen der Vorderachse mit der erfindungsgemäßen neuen Ventilschaltung gemäß Figuren 1a und 1b bestückt werden, an der Hinterachse eine Standardbeschaltung/Standardventile eingesetzt werden.

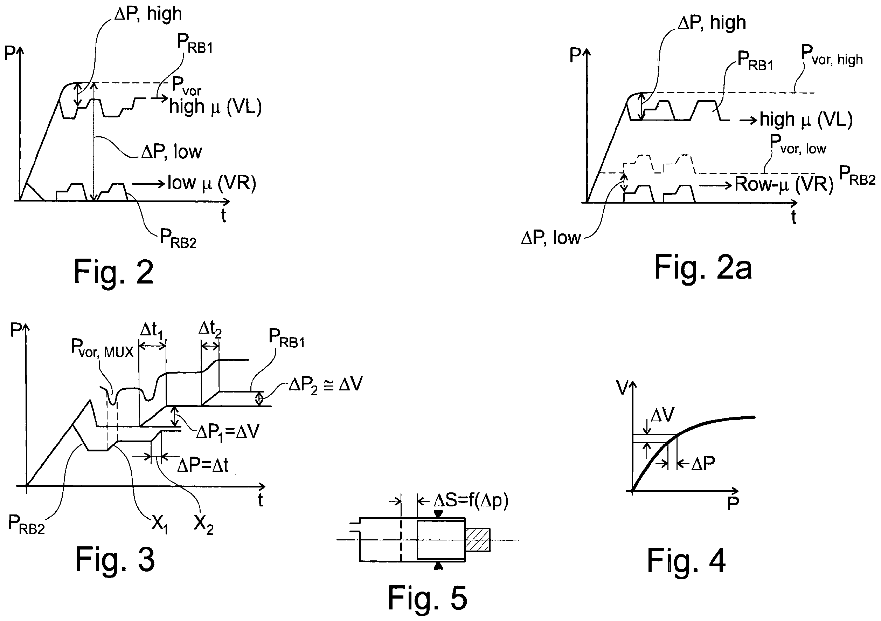

Die **Figur 2** zeigt mögliche prinzipielle Verläufe des Radbremszylinderdrucks (P) als Funktion der Zeit (t) während eines ABS-Betriebs mit Standard ABS. Der Fahrer löst, durch Betätigung des Bremspedals (in Figur 1 nicht eingezeichnet), die Bremse aus mit Vordruck pᵥₒᵣ. Hierbei wird vorausgesetzt, dass der Fahrer das Bremspedal derart betätigt, dass alle Räder in eine ABS-Regelung übergehen.

Auf glatter Fahrbahn sind die Radbremszylinderdrücke p, die sich unter Einfluss der ABS-Regelung einstellen, klein. Dieser Verlauf ist mit der Bemerkung "low-µ" bezeichnet. Der Druckunterschied Δp_{low} zwischen dem Vordruck pᵥₒᵣ und dem Radbremszylinderdruck p_{low-µ} kann große Werte annehmen, da der ungeregelte Vordruck pᵥₒᵣ Werte bis zu 250 bar erreichen kann. Beim geregelten Vordruck kann dieser sog. Δp_{low} ca. 50 bar sein, wenn der Radbremszylinderdruck bei einem Maximalwert von 30 bar liegt.

Auf asymmetrischer Fahrbahn (µ-Split), bei der die linken und rechten Räder auf unterschiedlich griffiger Fahrbahn rollen, stellen sich unter Einfluss der ABS-Regelung an den linken und rechten Rädern unterschiedliche Radbremszylinderdrücke ein. Zum Beispiel liegt dann am linken Vorderrad RB1 ein hoher Bremsdruck p_{RB1} an, während am rechten Vorderrad RB2 ein niedriger Bremsdruck P_{RB2} herrscht. Beim geregelten Vordruck kann dieser sog. Δp_{low} ca. 150 bar sein, wenn der Raddruckunterschied zwischen **low** und **high** bei einem Maximalwert von 130 bar liegt.

Im Multiplex-Betrieb wird die zeitliche veränderliche Drucksteuerung p(t) in dem Radbremszylinder durch Volumenverschiebung von der Druckversorgungseinheit DV in den Radbremszylinder bewirkt. Wenn das Einlassventil EV schließt, dann darf sich der Druck im Radbremszylinder nicht mehr ändern. Hat die Druckversorgungseinheit DV den Druck am linken Vorderrad (VL) erhöht P_{RB1} und soll die Druckversorgungseinheit DV den Druck am rechten Vorderrad P_{RB2} anschließend erhöhen, so darf sich der Druck am linken Vorderrad P_{RB1} während diesem Druckerhöhungsvorgang am rechten Vorderrad P_{RB2} nicht ändern.

Diese Vorgabe des Multiplex-Betriebs setzt konstruktive Voraussetzungen für das Einlassventil EV voraus. Herkömmliche Einlassventile EV haben ein Rückschlagventil, welches in Figur 1 exemplarisch mit "RV" dargestellt und bezeichnet ist, im Ventil integriert. Dieses Rückschlagventil soll im Fehlerfall "Ausfall der Ventilansteuerung" die Druckentlastung der Radbremszylinder bewirken. Das Rückschlagventil erlaubt kein "Druck-Halten" des Drucks am linken Vorderrad (VL), wenn die Druckversorgungseinheit DV den Druck am rechten Vorderrad P_{Low-µ} (VR) auf ein niedriges Druckniveau einstellt. Durch das Rückschlagventil RV des Einlassventils EV des linken Vorderrads fließt dann Bremsflüssigkeit zurück in die Druckversorgungseinheit DV, wodurch der Druck im Radbremszylinder am linken Vorderrad P_{high-µ} reduziert wird auf ein Niveau knapp oberhalb des Radbremszylinderdrucks am rechten Vorderrad P_{low-µ}, welche mit der strich-punktierten Linie angedeutet ist. Die große Druckdifferenz ΔP zwischen den Radbremszylindern am linken Vorderrad P_{high-µ} und am rechten Vorderrad P_{low-µ} kann nicht aufrechterhalten werden.

Abhilfe schafft das Weglassen des Rückschlagventils RV aus dem Einlassventil EV. Während des Multiplex-Betriebs kann die Druckdifferenz ΔP zwischen den Radbremszylindern am linken Vorderrad P_{RB1} und am rechten Vorderrad P_{RB2} dann aufrechterhalten werden. Damit im Fehlerfall "Ausfall der Ventilansteuerung" der Druck im Radbremszylinder nicht eingeschlossen bleibt, muss die Rückstellfederkraft des Einlassventils EV höher spezifiziert werden. Die Rückstellfederkraft muss so stark erhöht werden, dass das Einlassventil EV auch bei hohem Druck im Radbremszylinder sicher aufmacht. Entsprechend der Erhöhung der Rückstellfederkraft muss der Ansteuerstrom I_{EV} für das Einlassventil erhöht werden um das Ventil auch bei hohem Differenzdruck zwischen dem Vordruck Pᵥₒᵣ und dem Radbremszylinderdruck P sicher geschlossen zu halten. Dies macht aber, wie bereits erwähnt, das Einlassventil EV durch entsprechende hohe Magnetkräfte teuer und durch die hohe Ankerauftreffgeschwindigkeit auf den Anschlag entstehen hohe Geräusche.

Durch Verwendung eines speziellen Einlassventils EV, ein sogenanntes "druckentlastetes Ventil", kann vermieden werden, dass die Rückstellfederkraft des Einlassventils EV höher spezifiziert werden muss. Diese Ventile sind ebenfalls teuer und deshalb wird erfindungsgemäß eine geänderte Ventilschaltung des Einlassventils EV ohne Rückschlagventil RV vorgeschlagen, die in Figur 1a dargestellt und beschrieben worden ist. Hier wird der Innenraum des Einlassventils EV mit dem Bremskreis BK1 bzw. mit dem Bremskreis BK2 verbunden. Entsteht nun der vorgenannte Fehlerfall "Ausfall der Ventilansteuerung", so öffnet der Radbremszylinderdruck das Einlassventil EV selbststätig.

Wird das Einlassventil EV geschlossen, dann muss der Ansteuerstrom i_{EV} für das Einlassventil EV nur so hoch sein, dass die Druckdifferenz ΔP zwischen dem höheren Radbremszylinderdruck P und dem niedrigeren Vordruck Pᵥₒᵣ aufrechterhalten werden kann. Die Magnetkräfte sind entsprechend klein, da die maximale Druckdifferenz von 130 bar zwischen Radbremszylinderdruck (130bar) und Vordruck (0bar) und bei geschlossenem Ventil, d.h. kleinem Ankerluftspalt, wirkt. Während des Multiplex-Betriebs muss der Ansteuerstrom i_{EV} für das Einlassventil EV maximal für die maximale Druckdifferenz ΔP betragen.

**Figur 2a** zeigt die maximalen Druckdifferenzen welche bei P_{auf} ABS-Betrieb auf griffiger und glatter Fahrbahn an den Rädern auftreten können. Dabei ist Δp_{high} die maximale Druckdifferenz, die auf griffiger Fahrbahn entstehen kann, während ΔP_{low} die maximale Druckdifferenz auf glatter Fahrbahn ist. Wegen des Multiplex-Betriebes ist hier die maximale Druckdifferenz sowohl zwischen Pvor-high und P_{RB1}, ΔP_{high}, als auch zwischen P_{vor-low} und P_{RB2}, ΔP_{low,} gering. Deshalb brauchen die Ventilströme zur Schließung der Ventile auch nicht groß zu sein.

Die unterschiedlichen Vordrücke P_{vor-low} und P_{vor-high} werden durch entsprechende Steuerung der Druckversorgereinheit dynamisch verstellt, d.h. wird zwischen RB1 und RB2 umgeschaltet, wird vorher der Kolben der Druckerzeugereinheit zurück gefahren, um vor Öffnen des Einlassventils der RB2 ein niedrigeres Vordruckniveau einzustellen. Bei einer Umschaltung von RB2 auf RB1 wird der Kolben vorgefahren.

Vor Beginn der Druckänderung einer Radbremse startet der Solldruck auf dem Istdruckniveau bis maximal 40 bar höher als der Istdruck der jeweiligen Radbremse. Das Vordruckniveau wird derart dynamisch geändert, so dass die Druckdifferenz des Vordrucks zum Radsolldruckniveau (p_{RB2} bzw. p_{RB1} sind in dieser Darstellung Solldrücke, nicht Radistdrücke) näherungsweise konstant bleibt. Dies ermöglicht eine relative genaue Zeitsteuerung der Ventile und reduziert somit die Anforderungen an die Ventilfertigungstoleranzen.

Aufgrund des Umschaltens des Kolbens, kann ein Druckaufbau in RB1 und RB2 nur zeitlich versetzt erfolgen, was aufgrund der geringen Verzugszeiten geringe Auswirkung auf die Reglerperformance hat. Der Einfluss auf die Reglerperformance kann durch Einsatz eines hochdynamischen Motors minimiert werden. Der Druckabbau in den Radbremsen RB1-RB4 kann jederzeit zeitlich ohne Verzögerung erfolgen.

Die **Figur 3** zeigt unterschiedliche Möglichkeiten, wie die Druckerhöhungen P in den Radbremszylindern während des ABS-Betriebes gesteuert werden können. Gezeigt wird wieder ein exemplarischer Druckverlauf in Radbremszylinder RB1 (P_{RB1}) und in Radbremszylinder RB 2 (P_{RB2}) als Funktion der Zeit (t). Mit P_{vor-MUX} wird der Vordruck Pᵥₒᵣ angegeben, der wegen dem Multiplex-Betrieb erforderlich ist.

Der Druckverlauf bei x1 in Radbremszylinder RB 2 P_{RB2} zeigt einen gesteuerten

Druckanstieg durch Öffnung des Einlassventils EV des Radbremszylinders RB 2 für eine bestimmte Zeitdauer Δt, ohne dass eine Volumensteuerung ΔV stattfindet. Das Einlassventil der Radbremse RB1 ist während dieser Zeit geschlossen und der Druck in Radbremse RB1 wird gehalten und kann optional auch über Auslassventile verändert werden (nicht dargestellt im zeitlichen Druckverlauf in Figur 3). Dieser gesteuerte Druckanstieg P_{auf} wird mit Zeitsteuerung bezeichnet (Δt-Steuerung), wobei für die Zeitdauer Δt das Einlassventil EV geöffnet wird, und die Zeitdauer Δt in Abhängigkeit von der Größe des Druckaufbausprungs P_{auf} und u.A. von der Druckdifferenz zwischen dem Vordruck P_{vor,MUX} und dem Druck im Radbremszylinder P_{RB2} bestimmt wird. Bei der Δt-Steuerung wird der Kolben nicht, wie oben beschrieben, anfänglich zuerst zurückgeschoben um vor Öffnen des Einlassventils der RB2 ein niedrigeres Vordruckniveau einzustellen. Statt dessen wird das Einlassventil sofort geöffnet und der Kolben sofort so verschoben dass ein höheres Druckniveau im Bremskreis P_{vor,Mux} entsteht (größer P_{RB2}). Dadurch startet der Druckaufbau in P_{RB2} früher. Dies soll in seltenen Fällen als Alternative zur Volumensteuerung gelten, wenn z.B. die Multiplex-Steuerung kurz vor einem Druckabbau steht. Die Δt-Steuerung erfordert wenig Zeitaufwand für die Verstellung des Kolbens der Druckversorgung (DV). Durch die Öffnung des Einlassventils EV findet noch keine nennenswerte Druckerhöhung im Radbremszylinder RB2 statt, weil die Druckversorgung DV eine hohe hydraulische Steifigkeit aufweist. Wird nun das Einlassventil EV geöffnet, so fällt der Vordruck P_{vor,MUX} ab. Damit der Vordruck P_{vor-MUX} annähernd konstant bleibt, muss die Druckversorgung DV Volumen fördern. Der Vordruck P_{vor,MUX} wird dabei idealerweise auf einen kleinen Betrag (z.B. 20 bar) oberhalb des Drucks in Radbremszylinder RB2 (P_{RB2}) eingesteuert. Damit bleibt die Belastung der Druckversorgung DV auf ein Minimum begrenzt.

Zum Zeitpunkt X2 wird parallel zur Regelung der Volumenänderung ΔV in Radbremszylinder RB 1 für eine Druckerhöhung Δp₁ in der Ventilöffnungszeit Δt₁, eine Zeitsteuerung Δt-Steuerung für Radbremszylinder RB 2 eingesetzt. Während der Öffnungszeit des Einlassventils von Radbremszylinder RB 1 (Δt₁) wird das Einlassventil des Radbremszylinders RB 2 kurz für Δt geöffnet, wodurch sich der Druck im Radbremszylinder RB 2 um den Betrag Δp erhöht. Das entsprechende Volumen muss bei der Kolbensteuerung der Druckversorgung DV berücksichtigt werden. In dem Fall entspricht das Volumen der Volumenänderung für die Druckvolumenkennlinie für zwei Radbremsen, die sich aus Addition der jeweiligen Druckänderungen aus den Druckvolumenkennlinien der Radbremsen ablesen lässt. Insbesondere bei Druckänderungen von Vorderrad und Hinterrad sind unterschiedliche Druckvolumenkennlinien zu berücksichtigen, da die Druckvolumenkennlinien stark differieren.

Nach Δt, bleibt der Druck der RB1 konstant, d.h. das Einlassventil und Auslassventil der RB1 bleiben geschlossen. Während der nächsten Öffnung des Einlassventils EV des Radbremszylinders RB J z 1 über die Zeitdauer Δt₂ findet auch keine Druckerhöhung im Radbremszylinder RB 2 statt, d.h. das Einlassventil des

RB2 bleibt weiterhin geschlossen. Hier entspricht die Druckerhöhung ΔP₂ im Radbremszylinder RB2 der Volumenverschiebung ΔV der Druckversorgung DV. Vor dem Öffnen des Einlassventils EV2 für die Zeitdauer Δt₂ wird der Vordruck P_{vor,MUX} über eine entsprechende Volumenverschiebung durch die Druckversorgung DV dem Druck im Radbremszylinder RB1 angepasst, so dass beim Öffnen des

Einlassventils EV2 für die Zeit Δt₂ der Vordruck Pᵥₒᵣ, _{MUX} nicht abfällt. Die Geräuschentwicklung bei der Druckänderung im Radbremszylinder RB1 ist dann sehr gering. Die Druckerhöhung ΔP₂ im Radbremszylinder RB kann direkt aus der Korrelation zwischen Bremsdruckänderung ΔP im Radbremszylinder und Volumenänderung ΔV im Radbremszylinder RB 1 bestimmt werden (siehe Figur 4). Die Volumenverschiebung ΔV kann direkt aus der Kolbenverschiebung Δs der Druckversorgung DV bestimmt werden (siehe Figur 5). Damit ist die Kolbenverschiebung Δs auch ein Maß für die Druckänderung ΔP₂ in Radbremszylinder RB 1.

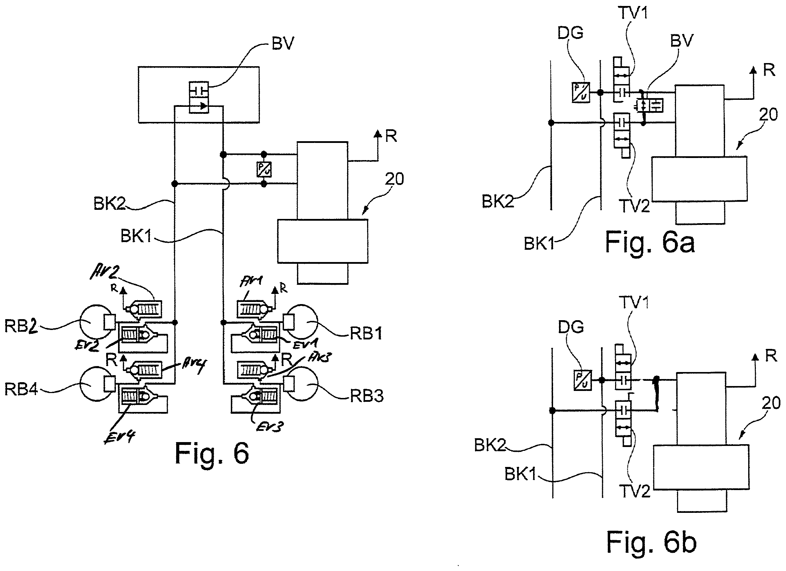

Die Figuren 6 bis 6b. zeigen verschiedene Möglichkeiten des Anschlusses der Ventilschaltung mit der elektrischen Druckversorgung. Die Druckversorgung DV kann aus einem Einfachhubkolben, Stufenkolben, Doppelhubkolben oder einer Verdrängerpumpe (z.B. Zahnradpumpe) bestehen, die über einen Elektromotor angetrieben ist.

In Figur 6 sind beide Bremskreise BK1 und BK2 an die Kolben-Zylindereinheit 20 bzw. Druckversorgereinheit DV angeschlossen. Hierbei können entweder beide Bremskreise BK1 und BK2 getrennt mit der Druckversorgung DV verbunden sein oder über ein Bypass-Ventil BV für spezielle Funktionen, z. B. ABS-Druckausgleich, verbunden sein.

Die Figur 6a zeigt eine 2-kreisige Druckversorgung, bei der die Bremskreise BK1 bzw. BK2 wahlweise getrennt oder gemeinsam mit Trennventil TV1 oder Trennventil TV2 verbunden werden.

Auch hier können die Ausgänge der Druckversorgung über ein Bypass-Ventil BV vor den Trennventilen TV1 und TV2 verbunden werden, was Sicherheitsvorteile hat, da die Trennventile TV1 und TV2 die Druckversorgung DV von den Bremskreisen BK1 und BK2 abtrennen. Als Druckversorgung bieten sich eine 2-kreisige Pumpe oder ein Doppelhubkolben nach DE 10 2014 107 112 an. Die Figur 6b zeigt eine 1-kreisige Druckversorgung, welche über Trennventile TV1 und TV2 mit den Bremskreisen BK1 und BK2 verbunden werden.

Die Trennventile in Figur 6a und 6b sind primär erforderlich, um die Druckerzeugereinheit bei Systemausfall vom Hauptzylinder 2 abzukoppeln, sofern kein anderer Mechanismus verhindert, dass das Volumen des Hauptzylinders bei Pedalbetätigung von der Druckversorgereinheit aufgenommen ist.

Im ABS-Regelbetrieb mit den beschriebenen Verfahren sind insbesondere bei Einsatz eines Druckgebers vorteilhafterweise beide Bremskreise über geöffnete Trennventile verbunden.

Alle Druckversorgungen ermöglichen eine definierte Druckänderung über eine definierte Volumensteuerung. Hierbei kann auch die zeitliche Änderung des Volumens durch unterschiedliche Geschwindigkeiten, z. B. des Kolbens der Druckversorgung, geändert werden, was das Potenzial besitzt zur Reduzierung der Druckschwingungen.

### Bezugszeichenliste

- 2: erste Kolben-Zylinder-Einheit
- 3: Wegsimulator
- 4: Betätigungseinrichtung
- 5: Sensoreinrichtung
- 6: Ventil
- 8: Ventil
- 10: Vorratsbehälter
- 12: Hydraulikleitung
- 14: Hydraulikleitung
- 16: Sensor
- 20: Druckquelle, zweite Kolben-Zylinder-Einheit
- AV: Auslassventil
- EV: Einlassventil
- BK1: Hydraulikleitung, Bremskreis
- BK2: Hydraulikleitung, Bremskreis
- BV: Bypassventil
- DG: Druckgeber
- HL1: Hydraulikleitung
- HL2: Hydraulikleitung
- RB1: Radbremse
- RB2: Radbremse
- RB3: Radbremse
- RB4: Radbremse
- T1: Trennventil
- T2: Trennventil

## Patentansprüche

1. Betätigungsvorrichtung, insbesondere für eine Fahrzeug-Bremsanlage, mit
- einer Steuerungseinrichtung und einer ersten Kolben-Zylinder-Einheit (2), deren mindestens einer Arbeitsraum über zumindest eine Hydraulikleitung und eine zumindest stromlos offene Einlassventile bzw. Schaltventile (EV) aufweisende Ventileinrichtung mit zumindest einem Aktuator, insbesondere einer Radbremse (RB1, RB2, RB3, RB4), verbunden ist,
- einer steuer- bzw. regelbaren Druckquelle (20, DV), um der zumindest einen Hydraulikleitung bzw. dem damit verbundenen Aktuator bzw. Radbremse Druckmittel zuzuführen,
**dadurch gekennzeichnet, dass** die Steuerungseinrichtung den Druckaufbau über Volumensteuerung (ΔV) und/oder Zeitsteuerung (Δt) mittels Einlassventilen (EV) regelt, und der Innenraum bzw. Ankerraum des Einlassventils (EV) über eine Hydraulikleitung mit dem zugehörigen Bremskreis (BK) und der Ventilsitzausgang (Ea) über eine Hydraulikleitung mit der zugehörigen Radbremse (RB) bzw. Aktuator verbunden ist.

2. Betätigungsvorrichtung nach Anspruch 1, **dadurch gekennzeichnet, dass** in bestimmen Regelsituationen, insbesondere aufgrund von unterschiedlichen Reibwerten an verschiedenen Aktuatoren bzw. Radbremsen, z.B. µ-Split, beim Druckaufbau in mindestens zwei Radbremsen, deren Ziel-Drücke bzw. Soll-Drücke unterschiedlich hoch sind, die Steuerungseinrichtung mittels der Druckquelle (DV) für die Aktuatoren bzw. Radbremsen mindestens zwei unterschiedlich hohe Steuervordrücke (pᵥₒᵣ) einstellt bzw. einregelt, wobei in dieser Regelsituation der Steuervordruck (pᵥₒᵣ) für eine Radbremse kleiner ist als der Istdruck mindestens einer anderen Radbremse.

3. Betätigungsvorrichtung nach Anspruch 1 oder 2, **dadurch gekennzeichnet, dass** der Druckaufbau in mindestens einem Aktuator bzw. einer Radbremse mittels Volumensteuerung (ΔV) nach Vorgabe der Steuerungseinrichtung erfolgt, wobei die Druckquelle (DV) das benötigte Verschiebungsvolumen (ΔV) an Hydraulikmedium zur Erzielung der gewünschten Druckänderung (Δp) verstellt bzw. bereitstellt.

4. Betätigungsvorrichtung nach einem der Ansprüche 1 bis 3, **dadurch gekennzeichnet, dass** der Druckaufbau mittels Volumensteuerung (ΔV) und/oder zeitgesteuert (Δt) offenem Ventil (EV) zeitgleich, zeitlich versetzt oder nacheinander erfolgt, wobei die Steuerungseinrichtung das Ventil (EV) zur vollständigen Druckänderung in der jeweiligen Radbremse bzw. dem Aktuator nur einmal zu Beginn von Δt geöffnet und nach Ablauf von Δt schließt.

5. Betätigungsvorrichtung nach einem der Ansprüche 1 bis 4, **dadurch gekennzeichnet, dass**
- eine Rückstellfeder (RF) das Ventilstellglied (MStö) in Richtung der geöffneten Stellung des Einlassventils (EV) kraftbeaufschlagt und/oder
- der Radbremsdruck das Öffnen des Einlassventils (EV) unterstützt, insbesondere das Einlassventil bei Ausfall der Versorgungsspannung durch den Radbremsdruck und die Rückstellfeder das Einlassventil (EV) aufgedrückt wird.

6. Betätigungsvorrichtung nach Anspruch 5, **dadurch gekennzeichnet, dass** die Einlassventile (EV) stromlos offene Ventile sind, wobei das in der Radbremse unter Druck stehende Hydraulikmedium das am Ventilsitz anliegende und beweglich gelagerte Ventilglied mit einer Kraft beaufschlagt, die das Ventilglied in der Notfallebene bzw. bei einer Störung, insbesondere dem Ausfall der Steuerungseinrichtung oder der Stromversorgung, vom Ventilsitz weg bewegt und das Einlassventil (EV) öffnet.

7. Betätigungsvorrichtung nach einem der vorhergehenden Ansprüche,
**dadurch gekennzeichnet, dass** die Einlassventile (EV) große Querschnitte für geringe Strömungsverluste aufweisen, insbesondere beim schnellen Anbremsen (TTL-Zeit 150ms, Bezug für TTL-Zeit: PKW-Bremsanlage) ein kleiner Staudruck kleiner gleich 10 bar, insbesondere kleiner gleich 5 bar erzielt wird.

8. Betätigungsvorrichtung nach einem der vorhergehenden Ansprüche, **dadurch gekennzeichnet, dass** die Ventileinrichtung zusätzlich mindestens ein Auslassventil (AV) umfasst.

9. Betätigungsvorrichtung nach einem der vorhergehenden Ansprüche, **dadurch gekennzeichnet, dass**
- der Druckabbau in einem Aktuator bzw. einer Radbremse mittels eines Auslassventils (AV) und/oder über das Einlassventil (EV) erfolgt und/oder
- der Druck in den anderen Radbremsen, bei denen der Druck nicht abgebaut werden soll durch Schließen des Einlassventils gehalten wird.

10. Betätigungsvorrichtung nach einem der vorhergehenden Ansprüche, **dadurch gekennzeichnet, dass** das Einlassventil (EV) einen druckentlasteten Ventilsitz aufweist bzw. mit einer entsprechenden Rückstellfeder ausgelegt ist, die sicherstellt, dass das Einlassventil (EV) bei maximalen Bremsdruck in der Radbremse geöffnet wird.

11. Betätigungsvorrichtung nach einem der vorhergehenden Ansprüche, **dadurch gekennzeichnet, dass** eine Kombination von Volumensteuerung (ΔV) mit Zeitsteuerung (Δt) vorgesehen ist, wobei insbesondere die Volumensteuerung (ΔV) durch Volumenförderung (z.B. durch Kolben) und die Zeitsteuerung (Δt) entsprechend der Druckdifferenz von Raddruck zu Vordruck geschieht.

12. Betätigungsvorrichtung nach einem der vorhergehenden Ansprüche, **dadurch gekennzeichnet, dass** ein zeitlich variables Steuervordruckniveau (pᵥₒᵣ) für Druckänderungen mittels der Druckquelle (DV) einstellbar bzw. einregelbar ist, insbesondere dass die Vordruckdifferenz (Δp = Pᵥₒᵣ - Pᵢₛₜ) zur Radbremse, deren Druck verändert wird, weitestgehend auf einer Druckdifferenz kleiner 40 bar gehalten wird, insbesondere dass die Druckdifferenz (Δpₛₒₗₗ) zwischen Steuervordruck (pᵥₒᵣ) und Radsolldruck (pₛₒₗₗ) zwischen 10 und 20 bar gehalten wird.

13. Betätigungsvorrichtung nach einem der vorhergehenden Ansprüche, **dadurch gekennzeichnet, dass**
- die Druckversorgung der Aktuatoren bzw. Radbremsen (RB1, RB2, RB3, RB4) einkreisig erfolgt, wobei ein Arbeitsraum der steuer- und regelbaren Druckquelle über Trennventile (TV1, TV2) mit den Bremskreisen (BK1, BK2) verbunden ist
und/oder
- die Druckversorgung der Aktuatoren bzw. Radbremsen (RB1, RB2, RB3, RB4) zweikreisig erfolgt, wobei insbesondere zwei Arbeitsräume der steuer- und regelbaren Druckquelle über Trennventile (TV1, TV2) mit den Bremskreisen (BK1, BK2) verbunden sind und wobei insbesondere die Ausgänge der Druckquelle vor den Trennventilen über ein Bypassventil (BV) miteinander verbunden sind.

14. Betätigungsvorrichtung nach einem der vorhergehenden Ansprüche, **dadurch gekennzeichnet, dass**
- die Druckquelle zumindest einen Kolben, Stufenkolben, Doppelhubkoben oder eine Förderpumpe aufweist, die direkt oder über hydraulische Elemente (Rückschlagventile, Ventile) mit dem
Vorratsbehälter verbunden sind und/oder
- die Betätigungsvorrichtung eine Betätigungseinrichtung, insbesondere einer Bremspedaleinrichtung, für die erste Kolben-Zylinder-Einheit (2) hat
und/oder
- die Volumensteuerung zeitlich variabel erfolgt.

15. Verfahren zum Betrieb einer Betätigungsvorrichtung, nach einem der vorhergehenden Ansprüche, **dadurch gekennzeichnet, dass**
- der Steuervordruck (pᵥₒᵣ) der Druckquelle (DV) zum Ist-Radbremsdruck im Regelbetrieb kleiner gleich 150 bar, insbesondere kleiner gleich 130 bar beträgt, optional, insbesondere im Multiplex-Fall (MUX), Ventile der Ventileinrichtung unter bestimmten Voraussetzungen (wie z.B. Fehlerfall "Ausfall der Ventilansteuerung") den am Aktuator bzw. der Radbremse eingeschlossenen Druck freigeben, insbesondere ohne Verwendung von zusätzlichen Ventilen, insbesondere Rückschlagventilen.

16. Verfahren nach Anspruch 15, **dadurch gekennzeichnet, dass** der Steuervorduck (pᵥₒᵣ) der Druckquelle (DV) dynamisch durch Vor- oder Rückhub des Kolbens der Druckerzeugereinheit (Kolben, Stufenkolben, Doppelhubkolben) unter Berücksichtigung der Druckvolumenkennlinie für verschiedene Radbremsen verstellt wird und vor Druckaufbau einer Radbremse ein Differenzdruck zum Istdruck der Radbremse kleiner gleich 40 bar eingestellt wird.

## Claims

1. Actuating device, in particular for a vehicle brake system, comprising
- a control device and a first piston-cylinder unit (2), the at least one working chamber of which is connected via at least one hydraulic line and a valve device with inlet valves or switching valves (EV) which are at least open when de-energized, to at least one actuator, in particular a wheel brake (RB1, RB2, RB3, RB4),
- a controllable or adjustable pressure source (20, DV) for supplying the at least one hydraulic line or the actuator connected thereto or the wheel brake, respectively with pressure medium, **characterized in that** the control device regulates the pressure build-up via volume control (ΔV) and/or time control (Δt) by means of inlet valves (EV), and the inner space or armature space of the inlet valve (EV) is connected via a hydraulic line to the associated brake circuit (BK) and the valve seat outlet (Ea) is connected via a hydraulic line to the associated wheel brake (RB) or actuator, respectively.

2. Actuating device according to claim 1, **characterized in that** in certain control situations, in particular due to different friction values at different actuators or wheel brakes, e.g. µ-split, during pressure build-up in at least two wheel brakes whose target pressures or set pressures are at different levels, the control device uses the pressure source (DV) for the actuators or wheel brakes to set or regulate at least two different control pre-pressures (pᵥₒᵣ), wherein in this control situation the control pre-pressure (pᵥₒᵣ) for one wheel brake is lower than the actual pressure of at least one other wheel brake.

3. Actuating device according to claim 1 or 2, **characterized in that** the pressure build-up in at least one actuator or wheel brake takes place by means of volume control (ΔV) as specified by the control device, the pressure source (DV) adjusting or providing the required displacement volume (ΔV) of hydraulic medium to achieve the desired pressure change (Δp).

4. Actuating device according to one of the claims 1 to 3, **characterized in that** the pressure build-up takes place by means of volume control (ΔV) and/or time-controlled (Δt) open valve (EV) simultaneously, offset in time or successively, wherein the control device opens the valve (EV) for complete pressure change in the respective wheel brake or actuator only once at the beginning of Δt and closes it after Δt has elapsed.

5. Actuating device according to one of claims 1 to 4, **characterized in that**
- a return spring (RF) applies force to the valve actuator (MStö) in the direction of the open position of the inlet valve (EV) and/or
- the wheel brake pressure assists the opening of the inlet valve (EV), in particular the inlet valve (EV) is pressed open by the wheel brake pressure and the return spring when the supply voltage fails.

6. Actuating device according to claim 5, **characterized in that** the inlet valves (EV) are de-energized open valves, the hydraulic medium pressurized in the wheel brake applying a force to the movably mounted valve member resting against the valve, which force moves the valve member away from the valve seat in the fallback level or in the event of a malfunction, in particular the failure of the control device or the power supply, and opens the inlet valve (EV).

7. Actuating device according to one of the preceding claims, **characterized in that** the inlet valves (EV) have large cross sections for low flow losses, in particular during rapid braking (TTL time 150ms, reference for TTL time: passenger car brake system) a back pressure of less than or equal to 10 bar, in particular less than or equal to 5 bar, is achieved.

8. Actuating device according to one of the preceding claims, **characterized in that** the valve device additionally comprises at least one outlet valve (AV).

9. Actuating device according to one of the preceding claims, **characterized in that**
- the pressure reduction in an actuator or a wheel brake is achieved by means of an outlet valve (AV) and/or by means of the inlet valve (EV) and/or
- the pressure in other wheel brakes in which the pressure is not to be reduced is maintained by closing the inlet valve.

10. Actuating device according to one of the preceding claims, **characterized in that** the inlet valve (EV) has a pressure-relieved valve seat or is designed with a corresponding return spring which ensures that the inlet valve (EV) is opened at maximum brake pressure in the wheel brake.

11. Actuating device according to one of the preceding claims, **characterized in that** a combination of volume control (ΔV) and time control (Δt) is provided, wherein in particular the volume control (ΔV) is achieved by volume delivery (e.g. by pistons) and the time control (Δt) is carried out according to the pressure difference from wheel pressure to inlet pressure.

12. Actuating device according to one of the preceding claims, **characterized in that** a time-variable control pre-pressure level (pᵥₒᵣ) for pressure changes is adjustable or settable by means of the pressure source (DV), in particular **in that** the pre- pressure difference (Δp = Pᵥₒᵣ - Pᵢₛₜ) with respect to the wheel brake, the pressure of which is changed, is kept as far as possible at a pressure difference of less than 40 bar, in particular that the pressure difference (Δpₛₒₗₗ) between the control pre-pressure (pᵥₒᵣ) and the target wheel pressure (pₛₒₗₗ) is kept between 10 and 20 bar.

13. Actuating device according to one of the preceding claims, **characterized in that**
- the pressure supply to the actuators or wheel brakes (RB1, RB2, RB3, RB4) takes place in a single circuit, wherein a working chamber of the controllable and adjustable pressure source is connected to the brake circuits (BK1, BK2) via isolating valves (TV1, TV2) and/or
- the pressure supply to the actuators or wheel brakes (RB1, RB2, RB3, RB4) takes place in two circuits, wherein in particular two working chambers of the controllable and adjustable pressure source are connected to the brake circuits (BK1, BK2) via isolating valves (TV1, TV2) and wherein in particular the outlets of the pressure source upstream of the isolating valves are connected to each other via a bypass valve (BV).

14. Actuating device according to one of the preceding claims, **characterized in that**
- the pressure source comprises at least one piston, stepped piston, double-stroke piston or a feed pump, which is connected directly or via hydraulic elements (non-return valves, valves) with the reservoir and/or
- the actuating device comprises an actuating device, in particular a brake pedal device, for the first piston-cylinder unit (2) and/or
- the volume control takes place in a time-variable manner.

15. Method for operating an actuating device, in particular according to one of the preceding claims, **characterized in that**
- the control pre-pressure (pᵥₒᵣ) of the pressure source (DV) to the actual wheel brake pressure during normal operation is less than or equal to 150 bar, in particular less than or equal to 130 bar, optionally, in particular in the multiplex case (MUX), valves of the valve device release the pressure enclosed at the actuator or the wheel brake under certain conditions (such as e.g., an error case "failure of the valve control"), in particular without using additional valves, in particular non-return valves.

16. Method according to claim 15, **characterized in that** the control pre-pressure (pᵥₒᵣ) of the pressure source (DV) is adjusted dynamically by forward or return stroke of the piston of the pressure generator unit (piston, stepped piston, double-stroke piston), taking into account the pressure-volume characteristic for different wheel brakes, and a differential pressure to the actual pressure of the wheel brake of less than or equal to 40 bar is set before pressure build-up of a wheel brake.

## Revendications

1. Dispositif d'actionnement, en particulier pour un dispositif de freinage de véhicule, avec
- un équipement de commande et une première unité piston-cylindre (2), dont au moins un espace de travail est relié à au moins un actionneur, en particulier un frein de roue (RB1, RB2, RB3, RB4), via au moins une conduite hydraulique et un équipement de vannes présentant des vannes d'admission ou vannes de commutation (EV) au moins ouvertes et sans courant,
- une source de pression (20, DV) pouvant être commandée ou régulée pour acheminer un moyen de pression vers la au moins une conduite hydraulique ou l'actionneur ou le frein de roue relié à celle-ci, **caractérisé en ce que** l'équipement de commande régule la montée en pression via une commande de volume (ΔV) et/ou une commande de temps (Δt) au moyen de vannes d'admission (EV), et l'espace intérieur ou l'espace d'induit de la vanne d'admission (EV) est relié au circuit de freinage (BK) correspondant via une conduite hydraulique et l'échappement de siège de vanne (Ea) est relié au frein de roue (RB) correspondant ou à l'actionneur via une conduite hydraulique.

2. Dispositif d'actionnement selon la revendication 1, **caractérisé en ce que** dans des situations de régulation déterminées, en particulier du fait de coefficients d'adhérence différents au niveau d'actionneurs ou de freins de roue différents, par exemple un µ-split, lors de la montée en pression dans au moins deux freins de roue dont les pressions cibles ou pressions de consigne sont de hauteurs différentes, l'équipement de commande règle ou régule au moins deux pressions d'alimentation de commande (pᵥₒᵣ) de hauteurs différentes pour les actionneurs ou les freins de roue au moyen de la source de pression (DV), dans lequel dans cette situation de régulation la pression d'alimentation de commande (pᵥₒᵣ) pour un frein de roue est inférieure à la pression réelle d'au moins un autre frein de roue.

3. Dispositif d'actionnement selon la revendication 1 ou 2, **caractérisé en ce que** la montée en pression dans au moins un actionneur ou un frein de roue se produit après instruction de l'équipement de commande au moyen d'une commande de volume (ΔV), dans lequel la source de pression (DV) règle ou fournit le volume de décalage (ΔV) requis à un milieu hydraulique pour obtenir la modification de pression (Δp) souhaitée.

4. Dispositif d'actionnement selon l'une des revendications 1 à 3, **caractérisé en ce que** la montée en pression se produit en même temps, en décalage dans le temps ou successivement au moyen d'une commande de volume (ΔV) et/ou d'une vanne (EV) commandée dans le temps (Δt), dans lequel l'équipement de commande ouvre la vanne (EV) pour une modification de pression complète dans le frein de roue respectif ou l'actionneur seulement une fois au début de Δt et la ferme après déroulement de Δt.

5. Dispositif d'actionnement selon l'une des revendications 1 à 4, **caractérisé en ce que**
- un ressort de rappel (RF) sollicite par une force l'organe de régulation de vanne (MStö) dans la direction de la position ouverte de la vanne d'admission (EV) et/ou
- la pression de frein de roue soutient l'ouverture de la vanne d'admission (EV), en particulier la vanne d'admission lors de la défaillance de tension d'alimentation par la pression de frein de roue, et le ressort de rappel de la vanne d'admission (EV) est enfoncé.

6. Dispositif d'actionnement selon la revendication 5, **caractérisé en ce que** les vannes d'admission (EV) sont des vannes ouvertes et sans courant, dans lequel le milieu hydraulique se trouvant sous pression dans le frein de roue sollicite avec une force l'organe de vanne appliqué contre le siège de vanne et monté de façon mobile, laquelle force déplace, en l'éloignant du siège de vanne, l'organe de vanne dans le plan d'urgence ou lors d'une perturbation, en particulier la défaillance de l'équipement de commande ou de l'alimentation en courant, et ouvre la vanne de commutation (EV).

7. Dispositif d'actionnement selon l'une des revendications précédentes, **caractérisé en ce que** les vannes d'admission (EV) présentent de grandes sections transversales pour des déperditions d'écoulement restreintes, en particulier lors d'un freinage rapide (temps TTL 150 ms, référence pour le temps TTL : dispositif de freinage de voiture particulière) est obtenu une petite pression dynamique inférieure ou égale à 10 bar, en particulier inférieure ou égale à 5 bar.

8. Dispositif d'actionnement selon l'une des revendications précédentes, **caractérisé en ce que** l'équipement de vannes comprend en outre au moins une vanne d'évacuation (AV).

9. Dispositif d'actionnement selon l'une des revendications précédentes, **caractérisé en ce que**
- la baisse de pression dans un actionneur ou un frein de roue se produit au moyen d'une vanne d'évacuation (AV) et/ou via la vanne d'admission (EV) et/ou
- la pression dans les autres freins de roue, pour lesquels la pression ne doit pas être abaissée, est maintenue par la fermeture de la vanne d'admission.

10. Dispositif d'actionnement selon l'une des revendications précédentes, **caractérisé en ce que** la vanne d'admission (EV) présente un siège de vanne délesté de pression ou est conçu avec un ressort de rappel correspondant qui garantit que la vanne d'admission (EV) sera ouverte lors d'une pression de freinage maximale dans le frein de roue.

11. Dispositif d'actionnement selon l'une des revendications précédentes, **caractérisé en ce qu'**est prévue une combinaison de commande de volume (ΔV) et de commande de temps (Δt), dans lequel en particulier la commande de volume (ΔV) se produit par refoulement de volume (par exemple des pistons) et la commande de temps (Δt) se produit conformément à la différence de pression de roue à pression d'alimentation.

12. Dispositif d'actionnement selon l'une des revendications précédentes, **caractérisé en ce qu'**un niveau de pression d'alimentation de commande (pᵥₒᵣ) variable dans le temps peut être réglé ou régulé pour des modifications de pression au moyen de la source de pression (DV), en particulier **en ce que** la différence de pression d'alimentation (Δp = Pᵥₒᵣ-Pᵢₛₜ) pour le frein de roue, dont la pression est modifiée, est maintenue autant que possible à une différence de pression inférieure à 40 bar, en particulier **en ce que** la différence de pression (Δpₛₒₗₗ) entre pression d'alimentation de commande (pᵥₒᵣ) et pression de roue de consigne (pₛₒₗₗ) est maintenue entre 10 et 20 bar.

13. Dispositif d'actionnement selon l'une des revendications précédentes, **caractérisé en ce que**
- l'alimentation en pression des actionneurs ou des freins de roue (RB1, RB2, RB3, RB4) se produit à circuit unique, dans lequel un espace de travail de la source de pression pouvant être commandée et régulée est relié aux circuits de freinage (BK1, BK2) via des valves d'isolement (TV1, TV2) et/ou
- l'alimentation en pression des actionneurs ou des freins de roue (RB1, RB2, RB3, RB4) se produit à double circuit, dans lequel en particulier deux espaces de travail de la source de pression pouvant être commandée et régulée sont reliés aux circuits de freinage (BK1, BK2) via des valves d'isolement (TV1, TV2), et dans lequel en particulier les échappements de la source de pression sont reliés ensemble avant les valves d'isolement via une valve de dérivation (BV).

14. Dispositif d'actionnement selon l'une des revendications précédentes, **caractérisé en ce que**
- la source de pression présente au moins un piston, un piston différentiel, un piston à double course ou une pompe de refoulement, qui sont reliés directement ou via des éléments hydrauliques (clapets de non-retour, vannes) au récipient de stockage, et/ou
- le dispositif d'actionnement a un équipement d'actionnement, en particulier un équipement de pédale de frein, pour la première unité piston-cylindre (2) et/ou
- la commande de volume se produit de façon variable dans le temps.

15. Procédé destiné à exploiter un dispositif d'actionnement, selon l'une des revendications précédentes, **caractérisé en ce que**
- la pression d'alimentation de commande (pᵥₒᵣ) de la source de pression (DV) pour la pression de frein de roue réelle est inférieure ou égale à 150 bar, en particulier inférieure ou égale à 130 bar en service régulier, le cas échéant, en particulier dans le cas d'un multiplexe (MUX), des vannes de l'équipement de vannes libèrent, dans des conditions déterminées (comme par exemple en cas de défaut « défaillance du pilotage de vanne »), la pression enfermée au niveau de l'actionneur ou du frein de roue, en particulier sans utilisation de vannes, en particulier de clapets de non-retour, supplémentaires.

16. Procédé selon la revendication 15, **caractérisé en ce que** la pression d'alimentation de commande (pᵥₒᵣ) de la source de pression (DV) est régulée de façon dynamique pour différents freins de roue par précourse et course de retour du piston de l'unité de production de pression (piston, piston différentiel, piston à double course) en fonction de la courbe caractéristique pression-volume, et avant la montée en pression d'un frein de roue une pression différentielle par rapport à la pression réelle de frein de roue est réglée inférieure ou égale à 40 bar.
